# FASCICULE DE BREVET EUROPEEN

(11) **EP 4 571 075 B1**
(45) Date de publication et mention de la délivrance du brevet: **25.02.2026**
(21) Numéro de dépôt: 24202015.4
(22) Date de dépôt: 23.09.2024
(51) Int. Cl.: F02C 7/047, F02C 7/08

(54) **AERONEF MUNI D'UN SYSTEME DE CHAUFFAGE POUR UN PLENUM DE TURBOMOTEUR**
FLUGZEUG MIT EINEM HEIZSYSTEM FÜR EINE MULDE EINES TRIEBWERKS
AIRCRAFT PROVIDED WITH A HEATING SYSTEM FOR A TURBINE ENGINE PLENUM

(30) Priorité: 14.12.2023 FR 2314190
(43) Date de publication de la demande: 18.06.2025
(73) Titulaire: Airbus Helicopters, 13725 Marignane Cedex (FR)
(72) Inventeur: COSTA, Stéphane, 13800 Istres (FR); DI-MARCO, Alexandre, 13725 Marignane (FR); ALBERTINI, Christophe, 13240 Septèmes les Vallons (FR)
(74) Mandataire: GPI Brevets

(56) Documents cités:
- EP-A1- 2 626 533
- FR-A1- 3 057 301
- US-A1- 2009 139 200
- US-A1- 2018 334 959

## Description

La présente invention concerne un aéronef muni d'un système de chauffage pour un plenum de turbomoteur. Un tel aéronef peut être un giravion. Le domaine technique de l'invention se rapporte donc au domaine des systèmes d'alimentation en air de moteur.

En particulier, un moteur peut être un turbomoteur comprenant un générateur de gaz et au moins une turbine. Le générateur de gaz est muni d'un ensemble de compression alimentant en air comprimé une chambre de combustion. De plus, le générateur de gaz est muni d'un ensemble de turbine mis en mouvement par les gaz chaud sortant de la chambre de combustion. L'ensemble de turbine est solidaire en rotation de l'ensemble de compression.

Pour alimenter l'ensemble de compression du générateur de gaz avec de l'air provenant de l'extérieur, l'aéronef comporte un système d'alimentation en air. En fonction de l'architecture du turbomoteur et de l'aéronef, le système d'alimentation en air peut comprendre une surface d'entrée d'air radiale. Un système d'alimentation en air à entrée d'air radiale est de plus statique, l'air pénétrant dans la surface d'entrée d'air radiale en étant principalement aspiré par le turbomoteur. A l'inverse, un système d'alimentation en air dynamique comporte une bouche d'air ingérant de l'air sous l'effet du déplacement de l'aéronef vers l'avant.

Un système d'alimentation en air à entrée d'air radiale comporte une ou plusieurs sections d'entrée. Chaque section d'entrée est munie d'une surface d'entrée d'air radiale, généralement rectangulaire, disposée radialement par rapport au turbomoteur. Cette section d'entrée est reliée par une conduite annulaire au générateur de gaz du turbomoteur. Un tel système peut être dénommé classiquement « plenum » par l'homme du métier.

Ainsi, un plenum comprend une conduite annulaire disposée autour d'un axe central le long duquel s'étend un turbomoteur. La conduite annulaire délimite ainsi une cavité annulaire en communication fluidique avec une ou plusieurs sections d'entrée et le turbomoteur.

Par conséquent, l'air situé à l'extérieur de l'aéronef pénètre dans le plenum par une section d'entrée d'air radiale, puis est dirigé radialement par la conduite annulaire vers le turbomoteur.

Eventuellement, une grille est placée à l'interface entre le plenum et le turbomoteur pour éviter que le turbomoteur ingère des particules indues.

Le document FR 3007798 A décrit ainsi un plenum. Le document FR 3057301 A1 décrit également un plenum selon l'art antérieur.

Lorsque l'aéronef vole dans des conditions givrantes, de la neige ou de la glace peut s'accumuler au fond du plenum. Le fond du plenum peut être constitué par la partie du plenum située au plus bas pour des angles d'assiette de l'aéronef autorisés prédéterminés. Le plenum peut comporter des drains pour évacuer l'eau contenu dans le plenum. Les évolutions en roulis de l'aéronef peuvent aussi permettre d'évacuer de la neige ou de la glace en dehors du plenum. En outre, le moteur est dimensionné pour fonctionner normalement suite à l'ingestion d'une certaine quantité de neige ou de glace. Il est à noter que le phénomène rencontré est de fait différent sur une entrée d'air dynamique, en particulier la problématique d'accrétion de neige ou de glace sur une paroi de fond du plenum puisque l'air peut pénétrer dans une entrée d'air dynamique avec une vitesse importante.

Néanmoins, l'ingestion d'une quantité trop importante de neige ou de glace est susceptible d'endommager des aubes de l'ensemble de compression du turbomoteur, ou encore d'éteindre la chambre de combustion dans des cas extrêmes. Dès lors, le plenum est défini pour que le turbomoteur ingère une quantité de neige ou de glace inférieure à un seuil.

Certains dispositifs permettant de lutter contre la formation de glace et de neige comportent des tapis chauffants électriques. De tels systèmes peuvent s'avérer relativement compliqués, et nécessitent une énergie électrique importante.

Le brevet FR2924471 B1 divulgue un système de filtration potentiellement muni d'un moyen de chauffage d'une grille.

Le brevet EP2129579 B1 décrit une bouche d'entrée d'air dynamique comprenant un canal toroïdal de circulation d'air pour chauffer le bord d'attaque de cette bouche d'entrée. Ce brevet vise à empêcher la formation de glace ou de neige et est donc éloigné de la problématique de limitation de la glace ou de la neige sur le fond d'un plenum. Autrement dit, le brevet EP2129579 B1 vise un système d'antigivrage, et non pas de dégivrage. Les documents FR3057301, EP2626533 et US2009139200 sont aussi connus.

La présente invention a alors pour objet de proposer un aéronef muni d'un système innovant visant à minimiser la quantité de neige et/ou de glace susceptible d'être ingérée par un turbomoteur.

La présente invention vise un aéronef muni d'un turbomoteur comprenant un générateur de gaz, le générateur de gaz comprenant un ensemble de compression alimentant en air comprimé une chambre de combustion, le générateur de gaz comprenant un ensemble de turbine alimenté en gaz par la chambre de combustion, l'aéronef ayant un système d'alimentation en air à entrée radiale muni d'un plenum alimentant en air l'ensemble de compression, le plenum comprenant un conduit, par exemple sensiblement annulaire, muni d'une ouverture externe ouverte sur un milieu extérieur situé à l'extérieur de l'aéronef, voire une ouverture interne en communication fluidique avec le turbomoteur. L'ouverture externe peut être une ouverture radiale statique, à savoir qui s'étend autour d'un axe central selon lequel le turbomoteur est agencé. L'axe central peut être un axe de symétrie d'au moins une partie du plenum et/ou du turbomoteur.

Cet aéronef comporte un système de chauffage, le système de chauffage comportant un échangeur thermique disposé dans un volume délimité par le plenum, le système de chauffage comportant une liaison fluidique d'alimentation et une liaison fluidique de refoulement reliées à l'échangeur thermique, la liaison fluidique d'alimentation acheminant de l'air chaud provenant du turbomoteur dans l'échangeur thermique.

Le vol en conditions givrantes peut s'avérer problématique. Certains aéronefs peuvent avoir un domaine de vol limité dans de telles conditions en raison des risques liés à l'ingestion de glace ou de neige dans un turbomoteur.

Pour résoudre ce problème, l'échangeur thermique de l'invention est alimenté en air chaud par le turbomoteur dans de telles conditions. Cet échangeur thermique est ainsi chauffé par de l'air chaud et permet d'atteindre une température de peau supérieure à zéro degré Celsius, voire même à 10 degrés Celsius. Dès lors, l'échangeur thermique peut réchauffer le plenum par convection et rayonnement, et peut ainsi limiter la quantité de glace ou de neige dans le plenum notamment en la faisant fondre. Cette solution va à l'encontre de préjugés puisque le plenum a pour fonction de capter de l'air frais provenant de l'extérieur. Agencer un système de chauffage dans le plenum parait contraire à l'ingestion d'air frais. Néanmoins, l'utilisation du système de chauffage dans des conditions givrantes peut avoir un impact acceptable pour le fonctionnement du moteur. Le système de chauffage de l'invention s'avère donc globalement intéressant en ayant un impact limité sur la température de l'air ingéré par le turbomoteur tout en réduisant la quantité de glace ou de neige susceptible d'être ingérée dans le turbomoteur.

En outre, le système de chauffage est simple et peut être agencé sur un aéronef existant.

L'aéronef peut de plus comprendre une ou plusieurs des caractéristiques qui suivent.

Selon une possibilité, le turbomoteur comprenant une veine gazeuse s'étendant du plenum en passant successivement par l'ensemble de compression puis la chambre de combustion et l'ensemble de turbine, la liaison fluidique d'alimentation peut être en liaison fluidique avec la veine gazeuse en aval d'un étage de compression de l'ensemble de compression.

La liaison fluidique d'alimentation a une prise qualifiée par l'homme du métier de « prise P3 » pour être alimenté avec de l'air chaud venant de la veine gazeuse.

L'air prélevé est de l'air à haute température, par exemple de l'ordre 200 à 400 degrés Celsius, et sous pression, par exemple de l'ordre de 6 à 9 bars, obtenu par compression de l'air ingéré par le turbomoteur.

Ainsi, l'air prélevé présente une température supérieure à l'air ingéré et permet de chauffer l'échangeur thermique, et par suite le plenum. La quantité d'air prélevé pour alimenter l'échangeur thermique peut être relativement faible, par exemple de l'ordre de 5 à 10 grammes par seconde, et n'a pas d'impact significatif sur le fonctionnement du turbomoteur.

Le système de chauffage peut ainsi s'avérer relativement simple, contrairement à un réchauffeur électrique nécessitant une énergie électrique importante.

Le système de chauffage selon l'invention est d'autant plus intéressant en présence d'un plenum formant une entrée d'air passive, à savoir dépourvue de moyen d'action pour contrôler les éléments pénétrant dans le plenum, tel que par exemple un filtre à particules.

Selon une possibilité compatible avec les précédentes, la liaison fluidique d'alimentation et la liaison fluidique de refoulement peuvent traverser une même paroi du plenum pour atteindre un compartiment moteur de l'aéronef, le turbomoteur étant au moins en partie logé dans ce compartiment moteur.

L'agencement du système de chauffage a alors un impact réduit sur le plenum.

Selon une possibilité compatible avec les précédentes, la liaison fluidique de refoulement peut être ouverte sur le compartiment moteur, le turbomoteur étant au moins en partie logé dans ce compartiment moteur.

L'air chaud traversant l'échangeur thermique est alors éjecté dans le compartiment moteur.

Un tel rejet n'a pas d'incidence sur l'aéronef dans la mesure où l'enveloppe du turbomoteur atteint des températures supérieures à la température atteinte par cet air en sortie de l'échangeur thermique. A titre illustratif, en utilisant la prise P3 précitée, l'air chaud à la sortie de la liaison fluidique de refoulement peut être de l'ordre de 100 à 120 degrés Celsius, alors que certaines zones du turbomoteur peuvent atteindre des températures supérieures à 150 degrés Celsius. De plus, le compartiment moteur peut comprendre un détecteur de feu qui génère un signal d'alerte en présence d'une température supérieure à 200 degrés Celsius dans le compartiment moteur, et donc en présence d'une température supérieure à la température de l'air chaud sortant de l'échangeur thermique.

De manière usuelle, le compartiment moteur peut déboucher sur une tuyère de sortie, qui aspire l'air présent dans ce compartiment moteur.

Selon une possibilité compatible avec les précédentes, l'échangeur thermique peut comporter deux parois séparées par des plots, ledit air chaud circulant entre les deux parois.

L'échangeur thermique peut être relativement plat, et peut avoir un impact limité sur le fonctionnement de l'entrée d'air. Les deux parois peuvent être parallèles entre elles. Par exemple, les parois ont chacune une forme sensiblement de parallélépipède vue de dessus, l'échangeur thermique pouvant avoir une forme de pavé.

Selon une possibilité compatible avec la précédente, l'échangeur thermique peut comporter un déviateur central ménageant un cheminement en U entre les deux parois, ce cheminement allant de la liaison fluidique d'alimentation à la liaison fluidique de refoulement selon un sens de circulation de l'air chaud.

Cette caractéristique permet d'agencer la liaison fluidique d'alimentation et la liaison fluidique de refoulement du même côté de l'échangeur thermique, au regard d'une direction d'extension de l'échangeur thermique. Dès lors, l'agencement du système de chauffage au sein d'un aéronef peut être facilité.

Selon une possibilité compatible avec les précédentes, le système de chauffage peut comporter une ou plusieurs fixations attachant l'échangeur thermique au plenum, l'échangeur thermique n'étant pas en contact au moins avec un fond du plenum.

Par exemple, quatre fixations sont connectées à quatre zones de coin de l'échangeur thermique, éventuellement situées sous l'échangeur thermique ou à proximité de l'échangeur thermique.

L'impact sur le plenum est ainsi limité. En outre, cet agencement permet de générer une veine d'air entourant l'échangeur thermique. Cet agencement peut permettre de favoriser le réchauffement par convection et/ou d'agencer des drains sous l'échangeur thermique pour évacuer l'eau.

Selon une possibilité compatible avec les précédentes, la liaison fluidique d'alimentation peut comporter une électrovanne agencée entre deux tuyaux, l'électrovanne étant configurée pour autoriser ou interdire l'acheminement dudit air chaud dans l'échangeur thermique.

Une interface homme-machine peut être reliée par une liaison filaire ou non filaire à l'électrovanne pour permettre à un pilote de piloter cette électrovanne. Ainsi, un pilote peut ouvrir l'électrovanne uniquement lorsque l'aéronef évolue dans des conditions givrantes.

Selon une possibilité compatible avec les précédentes, la liaison fluidique d'alimentation peut comporter une restriction formant un limiteur de débit.

La restriction peut permettre de maintenir un déplacement de l'air chaud dans l'échangeur thermique à une vitesse subsonique, tout en ayant un débit de fluide optimal afin d'obtenir un échange thermique optimisé. Le système de chauffage peut ainsi être relativement simple et facilement certifiable auprès des autorités aéronautiques.

Selon une possibilité compatible avec les précédentes, le système de chauffage peut comporter un capteur de pression relié à un alerteur.

Le capteur de pression est un capteur permettant de générer un signal en présence d'une pression supérieure à un seuil dans la liaison fluidique d'alimentation. Le capteur de pression a simplement pour fonction d'indiquer à un équipage si le système de chauffage fonctionne ou ne fonctionne pas.

Si le système de chauffage ne fonctionne pas, la pression dans la liaison fluidique d'alimentation est inférieure au seuil. Un pilote en est averti afin de sortir au plus vite des conditions givrantes.

Par exemple, le capteur de pression comporte un pressostat qui émet un signal quand la pression dans la liaison fluidique d'alimentation est supérieure ou égal au seuil. Le terme « signal » peut désigner un signal analogique ou numérique, électrique ou optique. L'alerteur peut être configuré pour générer une alerte tant que le signal n'est pas reçu.

Selon une possibilité compatible avec les précédentes, le plenum peut comporter au moins un drain.

Un tel drain peut comprendre un simple trou ou un dispositif plus complexe comprenant par exemple une valve et/ou une grille.

Au moins un drain peut être situé sur une paroi du plenum en regard de l'échangeur thermique.

Par exemple, le plenum peut comprendre quatre drains placés dans quatre coins pour drainer le plenum quels que soient les angles de roulis et de tangage de l'aéronef.

Selon une possibilité compatible avec les précédentes, le système d'alimentation en air peut être un système passif ingérant de l'air provenant dudit milieu extérieur sous l'effet d'une aspiration du turbomoteur.

Ce système est de fait distinct d'un système dynamique soumis à d'autres phénomènes.

L'invention et ses avantages apparaîtront avec plus de détails dans le cadre de la description qui suit avec des exemples donnés à titre illustratif en référence aux figures annexées qui représentent :
la figure 1, une vue extérieure d'un aéronef selon l'invention,
la figure 2, un schéma en coupe d'un plenum d'un aéronef selon l'invention ,
la figure 3, un schéma illustrant le système de chauffage de l'invention, et
la figure 4, une vue tridimensionnelle d'un système de chauffage de l'invention.

Les éléments présents dans plusieurs figures distinctes sont affectés d'une seule et même référence.

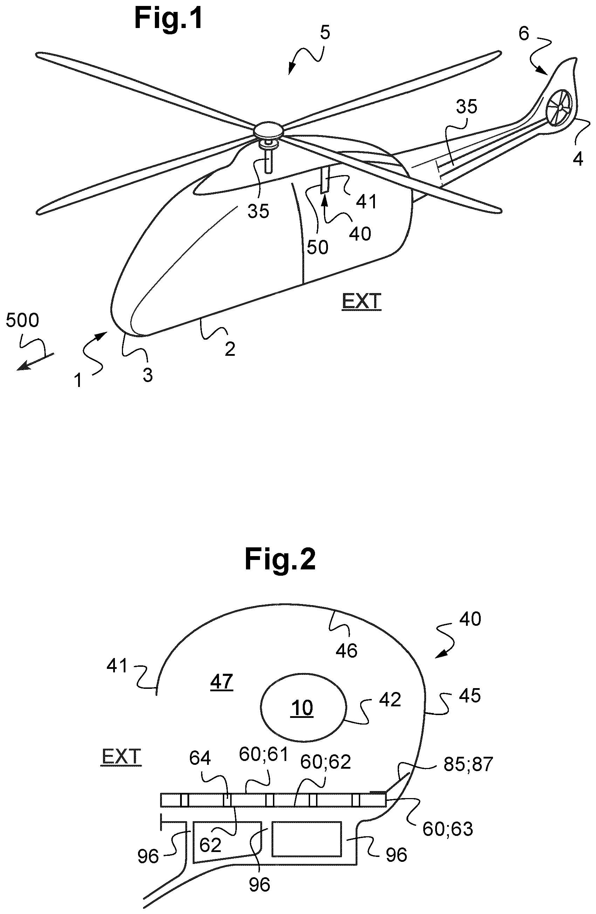

La figure 1 présente un aéronef 1 selon l'invention. Cet aéronef 1 comporte une cellule 2 s'étendant selon le sens d'avancement 500 de l'aéronef d'une extrémité arrière 4 vers un nez 3.

L'aéronef 1 comporte une installation motrice munie d'un système d'alimentation en air à entrée radiale muni d'un plenum 40 à ouverture externe 41 radiale pour alimenter un turbomoteur. Le terme « radiale » fait référence à une direction orthogonale à un axe central le long duquel s'étend le turbomoteur. Par exemple, le turbomoteur met en mouvement une chaine de transmission de puissance 35, cette chaine de transmission de puissance 35 pouvant mettre en mouvement au moins un rotor 5,6 participant à la propulsion et/ou à la sustentation et/ou au contrôle de cet aéronef 1. Par exemple, l'aéronef 1 est un hélicoptère muni d'un rotor principal 5 participant à sa sustentation et à sa propulsion, ainsi qu'un rotor de queue 6 participant au contrôle du mouvement en lacet de l'aéronef 1.

En référence à la figure 2, le plenum 40 comprend un conduit 46 muni d'une ouverture externe 41 ouverte sur un milieu EXT extérieur à l'aéronef, voire une ouverture interne 42 ouverte sur une entrée d'air d'un turbomoteur 10. Le conduit 46 peut être qualifié d'annulaire dans la mesure où il s'étend radialement de l'ouverture externe 41 vers l'ouverture interne 42. Pour délimiter le conduit 46, le plenum 40 peut comprendre deux cloisons 43, 44, invisibles sur la figure 2, reliées par une tranche 45, par exemple sensiblement en arc de cercle.

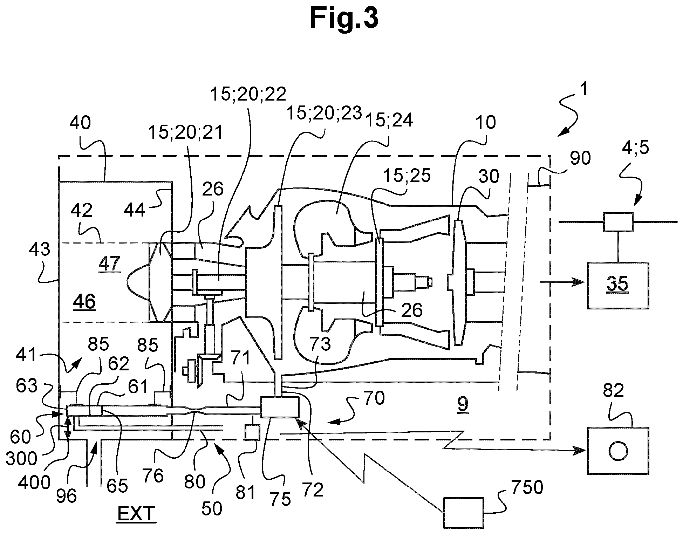

En référence à la figure 3, le turbomoteur 10 est agencé au moins partiellement dans un compartiment moteur 9. Ce compartiment moteur 9 peut déboucher sur une tuyère de sortie 90, l'air présent dans le compartiment moteur 9 étant aspiré en fonctionnement dans la tuyère de sortie 90.

Le turbomoteur 10 comprend un générateur de gaz 15. Le générateur de gaz 15 est muni d'un ensemble de compression 20 alimenté en air frais par le plenum 40. Par exemple, l'ensemble de compression 20 comporte un ou plusieurs étages de compression 21,23. L'exemple donné illustre un ensemble de compression 20 muni d'un premier étage de compression 21 solidaire en rotation d'un deuxième étage de compression 23, via un arbre 22.

En aval de l'ensemble de compression 20 selon le sens de circulation des gaz au sein du turbomoteur 10, le générateur de gaz 15 comporte une chambre de combustion 24, puis un ensemble de turbine 25. L'ensemble de turbine 25 est mis en mouvement par les gaz sortants de la chambre de combustion 24, et est solidaire en rotation de l'ensemble de compression 20. L'ensemble de turbine 25 peut comprendre au moins une turbine. Enfin, le turbomoteur 10 comporte au moins une turbine de travail 30, par exemple connectée à la chaine de transmission de puissance 35 évoquée précédemment.

Le turbomoteur 10 comporte dès lors une veine gazeuse 26 qui part du plenum 40 passe par les aubes des étages de compression 22, 23, puis par la chambre de combustion 24, les aubes de la ou des turbines de l'ensemble de turbine 25 et enfin les aubes de la ou les turbines de travail 30.

L'aéronef 1 comporte un système de chauffage 50 pour minimiser l'accumulation de glace et/ou de neige dans le plenum 40. Le système de chauffage 50 peut être un système de dégivrage pour limiter la formation de glace et de neige à un niveau acceptable pour le turbomoteur 10.

Ce système de chauffage 50 comporte un échangeur thermique 60 disposé dans le volume 47 délimité par le plenum 40, soit à l'intérieur du plenum 40 et non pas à l'intérieur d'une paroi du plenum 40.

Par exemple, le système de chauffage 50 comporte une ou plusieurs fixations 85 attachant chacune l'échangeur thermique 60 au plenum 40. Par exemple, l'échangeur thermique est fixé par deux fixations respectivement aux deux cloisons 43, 44 et par deux autres fixations à la tranche 45.

Eventuellement, l'échangeur thermique 60 est attaché au plenum 40 de manière à ne pas être en contact avec le plenum 40, et en particulier en étant séparé par un jeu au moins d'un fond 400 du plenum 40 voire aussi des cloisons 43, 44. Ainsi, un jeu 300, par exemple de l'ordre de 8 à 10 millimètres, sépare l'échangeur thermique 60 du fond 400 du plenum 40 pour permettre la circulation d'air sous l'échangeur thermique 60, plus précisément entre l'échangeur thermique 60 et le plenum 40. Le fond du plenum peut comprendre une partie du plenum située sous l'échangeur thermique, en l'absence d'un retournement de l'aéronef et/ou par exemple quand l'aéronef repose sur un sol plat.

De plus, le système de chauffage 50 comporte une liaison fluidique d'alimentation 70 pour mettre en liaison fluidique l'échangeur thermique 60 et la veine gazeuse 26. Par exemple, la liaison fluidique d'alimentation 70 est en liaison fluidique avec la veine gazeuse 26 en aval d'un étage de compression de l'ensemble de compression 20, voire de l'étage de compression 23 situé avant la chambre de combustion, afin de prélever de l'air chaud et comprimé.

Cette liaison fluidique d'alimentation 70 peut comprendre un ou des tuyaux 71, 72. Le terme « tuyau » désigne une ou plusieurs tuyauteries permettant de faire circuler le gaz chaud prélevé.

La liaison fluidique d'alimentation 70 peut comprendre une électrovanne 75 reliée par un premier tuyau 71 à l'échangeur thermique 60 et par un deuxième tuyau 72 à une prise 73 de pression du turbomoteur 10. L'électrovanne 75 peut être pilotée par une interface homme-machine 750. L'électrovanne 75 peut être une vanne à deux positions permettant soit d'interdire la circulation de gaz chaud jusqu'à l'échangeur thermique 60 soit d'autoriser la circulation de gaz chaud jusqu'à l'échangeur thermique 60.

La liaison fluidique d'alimentation 70 peut comprendre un capteur de pression 81, le cas échéant en aval de l'électrovanne 75. Le capteur de pression 81 est relié à un alerteur 82, par une liaison filaire ou non filaire. Le capteur de pression 81 peut, par exemple, transmettre un signal, analogique ou numérique, électrique ou optique, à l'alerteur 82 lorsqu'une pression dans la liaison fluidique d'alimentation 70 est supérieure ou égale à un seuil, ou inversement lorsqu'une pression dans la liaison fluidique d'alimentation 70 est inférieure au seuil. L'alerte générée peut prendre la forme d'une alarme visuelle, par exemple par le biais de l'émission d'une lumière avec une diode électroluminescente ou un équivalent ou de l'affichage sur un écran d'un ou plusieurs caractères, d'une alarme sonore, par le biais d'un haut-parleur, et/ou d'une alarme haptique, par exemple à l'aide d'une unité vibrante faisant vibrer un organe tenu ou porté par un individu.

La liaison fluidique d'alimentation 70 peut comprendre au moins une restriction 76 formant un limiteur de débit. Sur l'exemple illustré, une restriction 76 se trouve en aval de l'électrovanne 75. De manière alternative ou complémentaire, une restriction 76 peut se trouver en amont de l'électrovanne 75, par exemple sur le tuyau 72 pour limiter la vitesse de l'air dans l'électrovanne 75, voire aussi en amont du tuyau 72.

Par ailleurs, le système de chauffage 50 comporte de plus une liaison fluidique de refoulement 80 pour rejeter l'air chaud cheminant dans l'échangeur thermique 60. Par exemple, la liaison fluidique de refoulement 80 est ouverte sur le compartiment moteur 9.

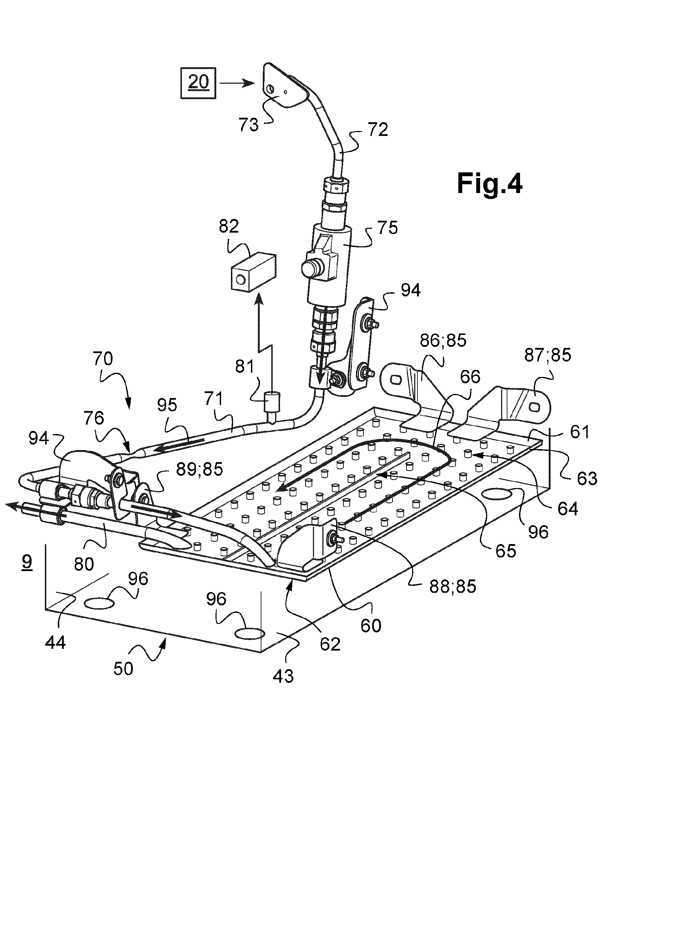

En référence à la figure 4, la liaison fluidique d'alimentation 70 et la liaison fluidique de refoulement 80 peuvent traverser une même paroi 44 du plenum 40 pour rejoindre le compartiment moteur 9.

Selon un autre aspect, le système de chauffage 50 peut comprendre au moins un support 94 connectant la liaison fluidique d'alimentation 70 ou la liaison fluidique de refoulement 80 soit au plenum 40 soit à une structure porteuse non représentée de l'aéronef 1.

A cet effet, l'échangeur thermique 60 peut comporter un espace interne délimité par deux parois 61, 62, et un bord périphérique 63 liant les deux parois 61 ,62.

Ces deux parois 61, 62 peuvent comprendre une paroi supérieure 61 et une paroi inférieure 62 située sous la paroi supérieure 61, du moins tant que l'aéronef 1 repose sur un sol sensiblement horizontal via un train d'atterrissage. La paroi supérieure 61 et la paroi inférieure 62 peuvent être parallèles entre elles et/ou sensiblement d'une forme parallélépipédique, voire identiques. La liaison fluidique d'alimentation 70 et la liaison fluidique de refoulement 80 sont chacune connectées à une des deux parois 61,62 pour faire circuler l'air chaud dans l'espace interne. Par exemple, la liaison fluidique d'alimentation 70 et la liaison fluidique de refoulement 80 peuvent être connectées à une même paroi, et plus précisément à la paroi supérieure 61 selon l'exemple représenté sur la figure 4.

Selon un autre aspect, l'échangeur thermique 60 peut comprendre un déviateur central 65, par exemple comportant une cloison éventuellement droite agencée entre les deux parois 61,62. Le déviateur central 65 ménage un cheminement 66 en U pour l'air chaud entre les deux parois 61, 62. Ce cheminement 66 s'étend de la liaison fluidique d'alimentation 70 à la liaison fluidique de refoulement 80. Par suite, la liaison fluidique d'alimentation 70 et la liaison fluidique de refoulement 80 peuvent être agencées du même côté de l'échangeur thermique 60 selon une direction d'extension en longueur de cet échangeur thermique 60.

Selon un autre aspect, le plenum 40 peut comporter au moins un drain 96. Par exemple, au moins un drain 96 est ménagé sur une paroi en regard de l'échangeur thermique 60, voire situé sous l'échangeur thermique 60. Par exemple, le plenum comporte quatre drains 96 situés au niveau de quatre coins du plenum.

Dès lors, lorsque l'aéronef 1 vole dans des conditions givrantes, le cas échéant, un pilote manœuvre l'interface homme-machine 750 pour ouvrir l'électrovanne 75. L'air chaud circulant dans l'ensemble de compression 20 du turbomoteur 10 circule automatiquement dans la liaison fluidique d'alimentation 70. Le cas échéant, le capteur de pression 81 détecte un changement de pression et transmet un signal à l'alerteur 82 qui émet une alerte.

L'air chaud s'écoule ensuite dans l'échangeur thermique 60, puis est éjecté dans le compartiment moteur 9 par la liaison fluidique de refoulement 80. Les parois 61,62 de l'échangeur thermique 60 s'échauffent et tendent à réchauffer le plenum 40. Le cas échéant la glace ou la neige présente dans le plenum 40 fond, et l'eau s'écoule en dehors du plenum 40 par un drain 96.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles.

## Revendications

1. Aéronef (1) muni d'un turbomoteur (10) comprenant un générateur de gaz (15), le générateur de gaz (15) comprenant un ensemble de compression (20) alimentant en air comprimé une chambre de combustion (24), le générateur de gaz (15) comprenant un ensemble de turbine (25) alimenté en gaz par la chambre de combustion (24), l'aéronef (1) ayant un système d'alimentation en air à entrée radiale muni d'un plenum (40) alimentant en air l'ensemble de compression (20), le plenum (40) comprenant un conduit (46) muni d'une ouverture externe (41) ouverte sur un milieu extérieur (EXT) situé à l'extérieur à de l'aéronef (1),
**caractérisé en ce que** ledit aéronef (1) comporte un système de chauffage (50), le système de chauffage (50) comportant un échangeur thermique (60) disposé dans un volume délimité par le plenum (40), le système de chauffage (50) comportant une liaison fluidique d'alimentation (70) et une liaison fluidique de refoulement (80) reliées à l'échangeur thermique (60), la liaison fluidique d'alimentation (70) acheminant de l'air chaud provenant du turbomoteur (10) dans l'échangeur thermique (60).

2. Aéronef selon la revendication 1,
**caractérisé en ce que** le turbomoteur (10) comprenant une veine gazeuse (26) s'étendant du plenum (40) en passant successivement par l'ensemble de compression (20) puis la chambre de combustion (24) et l'ensemble de turbine (25), la liaison fluidique d'alimentation (70) est en liaison fluidique avec la veine gazeuse (26) en aval d'un étage de compression (21) de l'ensemble de compression (20).

3. Aéronef selon l'une quelconque des revendications 1 à 2,
**caractérisé en ce que** la liaison fluidique d'alimentation (70) et la liaison fluidique de refoulement (80) traversent une même paroi (44) du plenum (40) pour atteindre un compartiment moteur (9) de l'aéronef (1), le turbomoteur (10) étant au moins en partie logé dans ce compartiment moteur (9).

4. Aéronef selon l'une quelconque des revendications 1 à 3,
**caractérisé en ce que** la liaison fluidique de refoulement (80) est ouverte sur un compartiment moteur (9) de l'aéronef (1), le turbomoteur (10) étant au moins en partie logé dans ce compartiment moteur (9).

5. Aéronef selon l'une quelconque des revendications 1 à 4,
**caractérisé en ce que** l'échangeur thermique (60) comporte deux parois (61, 62) séparées par des plots (64), ledit air chaud (95) circulant entre les deux parois (61, 62).

6. Aéronef selon la revendication 5,
**caractérisé en ce que** l'échangeur thermique (60) a un déviateur central (65) ménageant un cheminement (66) en U entre les deux parois (61, 62), ce cheminement (66) allant de la liaison fluidique d'alimentation (70) à la liaison fluidique de refoulement (80) selon un sens de circulation de l'air chaud.

7. Aéronef selon l'une quelconque des revendications 1 à 6,
**caractérisé en ce que** le système de chauffage (50) comporte une ou plusieurs fixations (85) attachant l'échangeur thermique (60) au plenum (40), l'échangeur thermique (60) n'étant pas en contact au moins avec un fond (400) du plenum (40).

8. Aéronef selon l'une quelconque des revendications 1 à 7,
**caractérisé en ce que** la liaison fluidique d'alimentation (70) comporte une électrovanne (75) agencée entre deux tuyaux (71, 72), l'électrovanne (75) étant configurée pour autoriser ou interdire l'acheminement dudit air chaud dans l'échangeur thermique (60).

9. Aéronef selon l'une quelconque des revendications 1 à 8,
**caractérisé en ce que** la liaison fluidique d'alimentation (70) comporte une restriction (76) formant un limiteur de débit.

10. Aéronef selon l'une quelconque des revendications 1 à 9,
**caractérisé en ce que** le système de chauffage (50) comporte un capteur de pression (81) relié à un alerteur (82).

11. Aéronef selon l'une quelconque des revendications 1 à 10,
**caractérisé en ce que** le plenum (40) comporte au moins un drain (96).

12. Aéronef selon l'une quelconque des revendications 1 à 11,
**caractérisé en ce que** le système d'alimentation en air est un système passif ingérant de l'air provenant dudit milieu extérieur (EXT) sous l'effet d'une aspiration du turbomoteur (10).

## Patentansprüche

1. Luftfahrzeug (1) mit einem Turbomotor (10), der einen Gasgenerator (15) umfasst, wobei der Gasgenerator (15) eine Kompressionsbaugruppe (20) umfasst, die eine Brennkammer (24) mit Druckluft versorgt, wobei der Gasgenerator (15) eine Turbinenbaugruppe (25) umfasst, die von der Brennkammer (24) mit Gas versorgt wird, wobei das Luftfahrzeug (1) ein Luftzufuhrsystem mit radialem Einlass aufweist, das eine Luftkammer (40) umfasst, die die Kompressionsbaugruppe (20) mit Luft versorgt, wobei die Luftkammer (40) einen Kanal (46) umfasst, der mit einer Außenöffnung (41) versehen ist, die zu einer Umgebung (EXT) außerhalb des Luftfahrzeugs (1) hin offen ist,
**dadurch gekennzeichnet, dass** das Luftfahrzeug (1) ein Heizsystem (50) umfasst, das Heizsystem (50) einen Wärmetauscher (60) umfasst, der in einem durch die Luftkammer (40) begrenzten Raum angeordnet ist, das Heizsystem (50) eine Vorlauf-Fluidverbindung (70) und eine Rücklauf-Fluidverbindung (80) umfasst, die mit dem Wärmetauscher (60) verbunden sind, und die Vorlauf-Fluidverbindung (70) Heißluft aus dem Turbomotor (10) in den Wärmetauscher (60) leitet.

2. Luftfahrzeug nach Anspruch 1,
**dadurch gekennzeichnet, dass** der Turbomotor (10) einen Gaskanal (26) umfasst, der sich von der Luftkammer (40) über die Kompressionsbaugruppe (20) und die Brennkammer (24) bis zur Turbinenbaugruppe (25) erstreckt, und die Vorlauf-Fluidverbindung (70) stromabwärts einer Verdichtungsstufe (21) der Kompressionsbaugruppe (20) in Fluidverbindung mit dem Gaskanal (26) steht.

3. Luftfahrzeug nach einem der Ansprüche 1 bis 2,
**dadurch gekennzeichnet, dass** die Vorlauf-Fluidverbindung (70) und die Rücklauf-Fluidverbindung (80) durch dieselbe Wand (44) der Luftkammer (40) verlaufen, um einen Motorraum (9) des Luftfahrzeugs (1) zu erreichen, wobei der Turbomotor (10) zumindest teilweise in diesem Motorraum (9) untergebracht ist.

4. Luftfahrzeug nach einem der Ansprüche 1 bis 3,
**dadurch gekennzeichnet, dass** die Rücklauf-Fluidverbindung (80) zu einem Motorraum (9) des Luftfahrzeugs (1) hin offen ist, wobei der Turbomotor (10) zumindest teilweise in diesem Motorraum (9) untergebracht ist.

5. Luftfahrzeug nach einem der Ansprüche 1 bis 4,
**dadurch gekennzeichnet, dass** der Wärmetauscher (60) zwei durch Stege (64) getrennte Wände (61, 62) aufweist und die Heißluft (95) zwischen den beiden Wänden (61, 62) zirkuliert.

6. Luftfahrzeug nach Anspruch 5,
**dadurch gekennzeichnet, dass** der Wärmetauscher (60) eine zentrale Umlenkvorrichtung (65) aufweist, die einen U-förmigen Weg (66) zwischen den beiden Wänden (61, 62) bildet, und dieser Weg (66) in Zirkulationsrichtung der Heißluft von der Vorlauf-Fluidverbindung (70) zur Rücklauf-Fluidverbindung (80) verläuft.

7. Luftfahrzeug nach einem der Ansprüche 1 bis 6,
**dadurch gekennzeichnet, dass** das Heizsystem (50) eine oder mehrere Befestigungen (85) aufweist, die den Wärmetauscher (60) an der Luftkammer (40) befestigen, und der Wärmetauscher (60) zumindest mit einem Boden (400) der Luftkammer (40) nicht in Kontakt steht.

8. Luftfahrzeug nach einem der Ansprüche 1 bis 7,
**dadurch gekennzeichnet, dass** die Vorlauf-Fluidverbindung (70) ein Magnetventil (75) umfasst, das zwischen zwei Rohren (71, 72) angeordnet ist, wobei das Magnetventil (75) konfiguriert ist, um den Fluss der Heißluft in den Wärmetauscher (60) zuzulassen oder zu unterbinden.

9. Luftfahrzeug nach einem der Ansprüche 1 bis 8,
**dadurch gekennzeichnet, dass** die Vorlauf-Fluidverbindung (70) eine Drossel (76) aufweist, die einen Durchflussbegrenzer bildet.

10. Luftfahrzeug nach einem der Ansprüche 1 bis 9,
**dadurch gekennzeichnet, dass** das Heizsystem (50) einen Drucksensor (81) umfasst, der mit einem Alarmgeber (82) verbunden ist.

11. Luftfahrzeug nach einem der Ansprüche 1 bis 10,
**dadurch gekennzeichnet, dass** die Luftkammer (40) mindestens einen Abfluss (96) aufweist.

12. Luftfahrzeug nach einem der Ansprüche 1 bis 11,
**dadurch gekennzeichnet, dass** das Luftzufuhrsystem ein passives System ist, das Luft aus der Umgebung (EXT) unter der Wirkung einer Ansaugung des Turbomotors (10) ansaugt.

## Claims

1. Aircraft (1) provided with a turbine engine (10) comprising a gas generator (15), the gas generator (15) comprising a compression assembly (20) supplying compressed air to a combustion chamber (24), the gas generator (15) comprising a turbine assembly (25) supplied with gas by the combustion chamber (24), the aircraft (1) having a system for supplying air to the radial inlet provided with a plenum (40) supplying air to the compression assembly (20), the plenum (40) comprising a conduit (46) provided with an external opening (41) opened onto an outer environment (EXT) located outside the aircraft (1),
**characterised in that** said aircraft (1) comprises a heating system (50), the heating system (50) comprising a heat exchanger (60) disposed in a volume delimited by the plenum (40), the heating system (50) comprising a fluid supply connection (70) and a fluid discharge connection (80) connected to the heat exchanger (60), the fluid supply connection (70) transiting the hot air coming from the turbine engine (10) into the heat exchanger (60).

2. Aircraft according to claim 1,
**characterised in that** the turbine engine (10) comprising a gas stream (26) extending from the plenum (40), while passing successively through the compression assembly (20) then the combustion chamber (24) and the turbine assembly (25), the fluid supply connection (70) is in fluid connection with the gas stream (26) downstream from a compression stage (21) of the compression assembly (20).

3. Aircraft according to any one of claims 1 to 2,
**characterised in that** the fluid supply connection (70) and the fluid discharge connection (80) pass through one same wall (44) of the plenum (40) to reach an engine compartment (9) of the aircraft (1), the turbine engine (10) being at least partially housed in this engine compartment (9).

4. Aircraft according to one of claims 1 to 3,
**characterised in that** the fluid discharge connection (80) is opened onto an engine compartment (9) of the aircraft (1), the turbine engine (10) being at least partially housed in this engine compartment (9).

5. Aircraft according to any one of claims 1 to 4,
**characterised in that** the heat exchanger (60) comprises two walls (61, 62) separated by studs (64), said hot air (95) circulating between the two walls (61, 62).

6. Aircraft according to claim 5,
**characterised in that** the heat exchanger (60) has a central diverter (65) accommodating a U-shaped path (66) between the two walls (61, 62), this path (66) going from the fluid supply connection (70) to the fluid discharge connection (80) along a circulation direction of the hot air.

7. Aircraft according to any one of claims 1 to 6,
**characterised in that** the heating system (50) comprises one or more fixings (85) attaching the heat exchanger (60) to the plenum (40), the heat exchanger (60) not being in contact at least with a bottom (400) of the plenum (40).

8. Aircraft according to any one of claims 1 to 7,
**characterised in that** the fluid supply connection (70) comprises a solenoid valve (75) arranged between two pipes (71, 72), the solenoid valve (75) being configured to enable or prohibit the path of said hot air in the heat exchanger (60).

9. Aircraft according to any one of claims 1 to 8,
**characterised in that** the fluid supply connection (70) comprises a restriction (76) forming a flow rate limiter.

10. Aircraft according to any one of claims 1 to 9, **characterised in that** the heating system (50) comprises a pressure sensor (81) connected to an alerter (82).

11. Aircraft according to any one of claims 1 to 10, **characterised in that** the plenum (40) comprises at least one drain (96).

12. Aircraft according to any one of claims 1 to 11,
**characterised in that** the air supply system is a passive system ingesting the air coming from said outer environment (EXT) under the effect of a suctioning of the turbine engine (10).
